# FASCICULE DE BREVET EUROPEEN

(11) **EP 2 354 424 B1**
(45) Date de publication et mention de la délivrance du brevet: **12.08.2015**
(21) Numéro de dépôt: 11153406.1
(22) Date de dépôt: 04.02.2011
(51) Int. Cl.: E06B 9/17, E06B 9/90, G01P 13/00, G01P 15/18

(54) **Capteur de mouvement pour dispositif domotique**
Bewegungsmelder für Hausautomationsvorrichtung
Motion sensor for home-automation device

(30) Priorité: 04.02.2010 FR 1050788
(43) Date de publication de la demande: 10.08.2011
(73) Titulaire: Somfy SAS, 74300 Cluses (FR)
(72) Inventeur: Gérinière, Pierre, 74300, Cluses (FR)
(74) Mandataire: Bugnion Genève

(56) Documents cités:
- EP-A1- 0 671 542
- EP-A1- 1 014 322
- EP-A1- 1 245 779
- EP-A1- 1 299 732
- EP-A1- 1 843 004
- EP-A1- 1 944 449
- EP-A1- 2 067 922
- EP-A2- 0 770 757
- EP-A2- 1 811 273
- DE-A1-102007 029 496
- DE-U1- 20 000 682
- FR-A1- 2 829 700
- GB-A- 2 180 976

## Description

L'invention concerne un dispositif domotique de fermeture ou de protection solaire dans un bâtiment comprenant une structure fixe de maintien et de guidage, un actionneur, un capteur de mouvement et un élément enroulable déplaçable dans la structure fixe sous l'action de l'actionneur. Un tel élément enroulable est par exemple un volet roulant. L'actionneur électrique entraîne en rotation un tube d'enroulement sur lequel vient s'enrouler un tablier, constituant l'élément enroulable. Une première extrémité de l'élément enroulable est raccordée au tube d'enroulement, et une deuxième extrémité, ou extrémité libre, est raccordée à une lame finale, qui se déplace dans des coulisses lors d'une phase de déroulement de l'élément enroulable. Un autre type d'élément enroulable est un store en toile. La première extrémité de l'élément enroulable est raccordée au tube d'enroulement, et l'extrémité libre, est raccordée à une barre de charge qui contribue par son poids à entraîner l'élément enroulable lors d'une phase de déroulement. La présente invention s'applique également à d'autres types d'éléments enroulables, par exemple un store à bras.

Du fait du caractère automatique des manoeuvres, la lame finale ou barre de charge est susceptible de rencontrer des obstacles lors de son mouvement. Aussi est-il connu, par exemple des brevets GB 2 180 976, EP 1 014 322, DE 200 00 682, EP 1 245 779, EP 2 067 922, de disposer tout ou partie d'un capteur de mouvement au niveau de la barre de charge ou lame finale.

Ce capteur de mouvement est généralement muni de moyens de communication, tel qu'un émetteur radiofréquences. Il est en outre utilisé pour envoyer un signal d'alarme vers l'actionneur ou directement vers un autre équipement domotique tel qu'une centrale d'alarme en cas de mouvement de la barre de charge ne résultant pas d'une activation de l'actionneur. Cette situation peut survenir lors d'une tentative d'intrusion dans le cas d'un volet roulant ou être le résultat d'un vent violent agissant sur le store.

Il est également connu de la demande de brevet EP 1 944 449 de disposer un capteur de mouvement muni d'un accéléromètre sur la barre de charge d'un store, en vue de détecter un vent violent et d'émettre alors une commande de repli du store. Dans le brevet EP 1 299 732, des moyens de mesure assurent à cet effet le réveil de moyens de traitement.

Le brevet DE102007029496 quant à lui décrit un dispositif domotique selon le préambule de la revendication 1.

Ces différents documents ne prévoient toutefois pas une interaction de contact directe, lors de l'enroulement de l'élément enroulable, entre le capteur de mouvement servant à détecter un obstacle en cours de déploiement et une surface de contact appartenant à la structure fixe, assurant le maintien et/ou le guidage de l'élément enroulable, telle qu'un caisson, une butée d'une coulisse ou un coffre d'enroulement.

Il existe cependant un problème relatif au réglage des actionneurs lorsque l'élément enroulable est dans la position enroulée, réglage nécessitant un positionnement précis de la barre de charge par rapport à la structure fixe.

Ce problème est mentionné à plusieurs reprises dans l'art antérieur.

Le brevet EP 1 843 004 décrit l'association d'une pluralité de moyens de détection disposés dans la barre de charge (dite profilé d'extrémité) et/ou entre la barre de charge et une première lame de tablier et/ou sous la barre de charge, pour détecter un mouvement relatif entre la barre de charge et cette première lame ou pour détecter un mouvement relatif entre deux parties de la barre de charge. Les différents moyens sont aptes à faire la différence entre une détection d'obstacle et une fin de course basse lors du déroulement du tablier, mais la pluralité des moyens rend le montage délicat et coûteux.

Dans le cas d'un store cassette, la barre de charge du store joue un rôle d'obturateur pour le caisson, protégeant ainsi le store des intempéries. Il est important d'arrêter le mouvement de l'actionneur quand cette position de fermeture est atteinte, mais avant d'exercer une tension trop importante sur la toile du store. Dans les brevets EP 0 671 542 et EP 0 770 757, une détection de couple et/ou un mouvement à couple réduit sont utilisés. Ces documents montrent que les variations dimensionnelles de la toile (en particulier son allongement dû au vieillissement) nécessitent des ajustements fréquents si l'arrêt est provoqué par comptage.

Il est connu de la demande de brevet EP 1 811 273 de disposer un capteur de mouvement amovible sur la barre de charge d'un volet roulant. Le capteur de mouvement comprend un accéléromètre permettant la mesure de l'accélération au cours du mouvement et son intégration simple ou double pour obtenir des valeurs instantanées de vitesse et/ou de position. Ce capteur n'est en revanchepas utilisé pour interagir directement avec une structure fixe d'un dispositif domotique.

Dans le cas de volets roulants, des butées mécaniques sont souvent utilisées, conjointement avec une détection de couple de l'actionneur, afin de mettre fin au mouvement d'enroulement au voisinage de la position totalement enroulée. Ces butées sont par exemple des équerres disposées sur la lame finale ou des butées spécifiques coopérant avec des éléments d'arrêt dans les coulisses latérales guidant le volet roulant. Sauf à recourir à des moyens de détection très sensibles et donc coûteux, un inconvénient connu de l'arrêt par détection de couple est, de même que pour la toile des stores, la nécessité de provoquer une tension du tablier avant d'atteindre le seuil de détection. De ce fait, le contact des butées provoque une flexion de l'élément enroulable et/ou des marques de rayures ou une déformation de la structure fixe.

Pour éviter que la barre de charge soit visible en position enroulée, et qu'elle contribue à masquer une partie de la baie, certains fabricants de volets roulants préfèrent que le mouvement d'enroulement ne s'arrête qu'une fois la barre de charge à l'intérieur du caisson. Il est donc utile de pouvoir repérer cette position, non visible, en particulier pour arrêter un mouvement d'enroulement avant que la barre de charge ne quitte les coulisses latérales de guidage.

Par ailleurs, la plupart des caissons possèdent des ouvertures de plus en plus fines pour éviter les déperditions d'énergie par le caisson. La présence d'un capteur fixé sur la barre de charge peut être problématique et conduire à un endommagement de celui-ci lors de l'enroulement total du volet dans le caisson.

L'invention remédie à ces problèmes ou inconvénients de l'art antérieur.

Selon l'invention, le capteur de mouvement du dispositif domotique de fermeture ou de protection solaire comprenant une structure fixe, un actionneur et un élément enroulable déplaçable vis-à-vis de la structure fixe sous l'action de l'actionneur, comprend des moyens de mesure de mouvement et des moyens d'émission d'un signal sans fil à destination du dispositif domotique, un boîtier et des moyens de fixation du capteur à une barre de charge positionnée à une extrémité libre de l'élément enroulable, le boîtier du capteur de mouvement comprenant un moyen de contact destiné à entrer en contact avec une surface de contact appartenant à la structure fixe, lors d'une manoeuvre d'enroulement de l'élément enroulable au voisinage d'une position totalement enroulée.

Selon l'invention, le moyen de contact peut appartenir à un élément élastique du boîtier protégeant le capteur lors de contacts de type butée avec la surface de contact.

Selon l'invention, le moyen de contact peut appartenir à un élément rigide du boîtier, ledit élément rigide étant connecté au boîtier par une liaison élastique et protégeant le capteur lors de contacts de type butée avec la surface de contact.

Selon l'invention, le moyen de contact peut comprendre un relief cranté.

Selon l'invention, le boîtier peut comprendre deux éléments partiellement mobiles l'un par rapport à l'autre, un premier élément partiellement mobile étant apte à être fixé à la barre de charge et l'autre élément partiellement mobile comprenant le moyen de contact.

Selon l'invention, les moyens de mesure de mouvement peuvent être disposés dans le premier élément partiellement mobile et en ce le capteur peut comprendre un vibreur mécanique activé par le déplacement relatif des éléments partiellement mobiles.

Selon l'invention, les moyens de mesure de mouvement peuvent être disposés dans le deuxième élément partiellement mobile.

Selon l'invention, le moyen de contact peut être apte à coopérer avec une surface de contact constituée par un bord rigide du caisson limitant une ouverture traversée par l'élément enroulable lors de son mouvement.

Selon l'invention, le moyen de contact peut être apte à coopérer avec une surface de contact constituée par un élément souple de la structure limitant une ouverture traversée par l'élément enroulable lors de son mouvement.

Selon l'invention, le moyen de contact peut être apte à coopérer avec une surface de contact constituée par une butée de coulisse située au voisinage d'une extrémité supérieure d'une coulisse guidant l'élément enroulable.

Selon l'invention, les moyens de fixation peuvent comprendre des éléments assurant au moins un jeu ou un degré de liberté du capteur vis-à-vis de l'élément enroulable.

Dans le procédé de détection de mouvement selon l'invention mettant en oeuvre un capteur de mouvement tel que décrit ci-dessus fixé à un élément enroulable dans une structure fixe, un contact entre le moyen de contact du capteur et une surface de contact appartenant à la structure fixe provoque un déplacement particulier du capteur de mouvement, reconnu par le capteur de mouvement qui émet alors un signal sans fil particulier vers l'actionneur entraînant l'élément enroulable.

Selon l'invention, le déplacement particulier peut comprendre :
- une variation de mouvement dans une direction principale du mouvement (A1) de l'élément enroulable, et/ou
- un mouvement de rotation (A2) du capteur de mouvement autour d'un axe parallèle à l'axe (XX') de la barre de charge de l'élément enroulable, et/ou
- un mouvement alternatif (A3-A7) du capteur de mouvement, et/ou
- un mouvement comprenant une composante de mouvement (A0) perpendiculaire à la direction principale du mouvement.

Selon l'invention, le dispositif domotique de fermeture ou de protection solaire comprend un capteur de mouvement tel que décrit ci-dessus et utilise le procédé de détection décrit ci-dessus.

L'invention sera mieux comprise par l'homme du métier grâce à la description détaillée de plusieurs modes d'exécution en relation avec les dessins associés, dans lesquels :
La figure 1 représente schématiquement un dispositif domotique selon l'invention, dans un premier mode de réalisation,
La figure 2A-2C détaille un premier mode de réalisation du capteur de mouvement du dispositif domotique, selon 3 variantes de réalisation,
Les figures 3A-3C représentent schématiquement et partiellement un deuxième mode de réalisation du dispositif domotique, dans trois positions successives,
La figure 4 représente une variante d'un boîtier du capteur de mouvement,
La figure 5 représente schématiquement et partiellement un troisième mode de réalisation du dispositif domotique,
La figure 6 illustre un procédé de fonctionnement du dispositif.

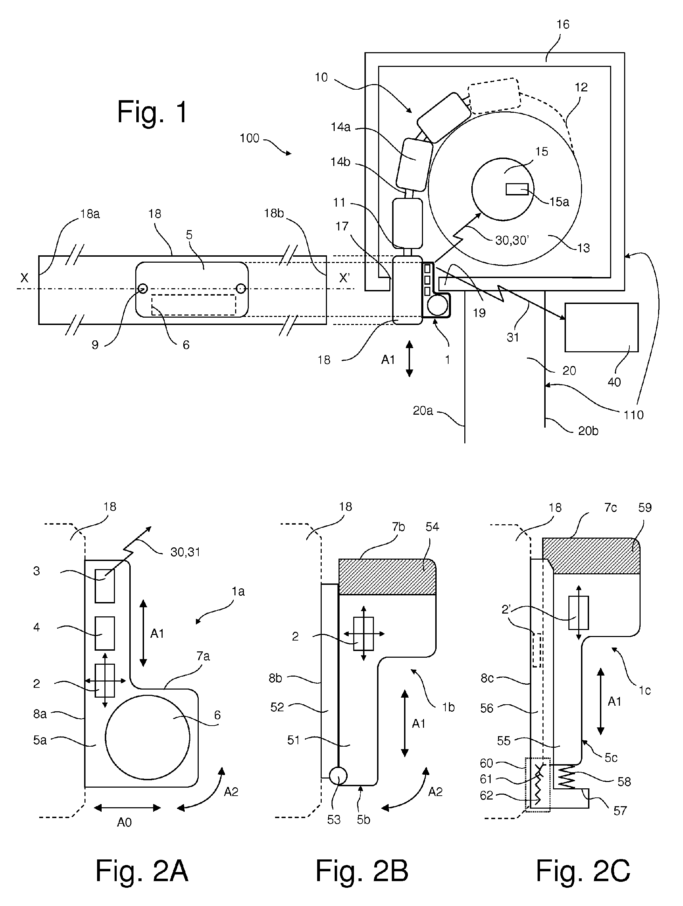

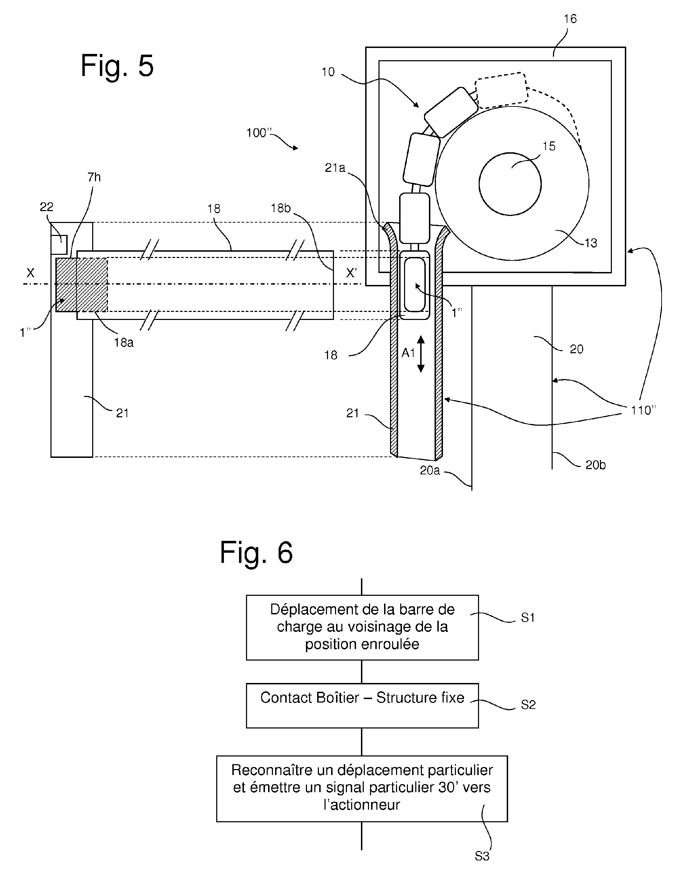

La figure 1 représente schématiquement un dispositif domotique 100 selon l'invention, dans un premier mode de réalisation d'un capteur de mouvement, applicable au cas où ce dernier entre en butée avec un caisson. La partie droite de la figure, telle que désignée par la flèche de la référence 100, est une vue de côté simplifiée et partielle d'un volet roulant, dans une position enroulée. Le dispositif domotique comprend une structure fixe 110 et un volet roulant déplaçable dans cette structure fixe. Le volet roulant constitue un élément enroulable 10, dont une première extrémité 11 est libre, tandis qu'une deuxième extrémité 12 est raccordée à un tube d'enroulement 13. Le volet roulant comprend des lames 14a reliées les unes aux autres par des articulations 14b. Les articulations sont susceptibles de donner un jeu angulaire entre deux lames consécutives. Elles peuvent aussi dans certains cas autoriser un écartement variable entre les lames. Le tube d'enroulement comprend un actionneur 15 permettant son entraînement dans deux sens de rotation, provoquant la fermeture du volet lors d'un déroulement et son ouverture lors d'un enroulement. Le tube d'enroulement est disposé dans un caisson 16, par exemple en acier plié, comprenant une ouverture ou fente longitudinale 17 traversée par le volet roulant lors de son mouvement. L'extrémité libre du volet est fixée à une barre de charge 18. Cette barre de charge se déplace le long de coulisses (représentées en figure 5) partant du caisson et guidant le mouvement de translation du volet. La structure fixe 110 comprend ainsi la maçonnerie et/ou le vitrage, le caisson, les coulisses, les tulipes, situées en extrémité supérieure des coulisses et formant la liaison entre le caisson et les coulisses, et le tube d'enroulement.
Sur la barre de charge est rapporté un capteur de mouvement 1, dont une fonction principale est la détection de modification de mouvement dans la direction principale du mouvement, représentée par une double flèche A1, lors du déroulement ou de l'enroulement du volet. Par direction principale du mouvement, on entend la direction au sens fonctionnel : la verticale dans le cas d'un volet roulant de façade. Si le volet roulant est installé sur une fenêtre de toit, inclinée selon la pente du toit, la direction principale du mouvement est celle du toit. Le capteur permet préférentiellement de détecter également une inclinaison par rapport à l'horizontale de la lame finale (celle-ci pouvant par exemple être provoquée lors d'un blocage du volet dans une des coulisses ou par la présence d'un obstacle proche d'une coulisse) et/ou des secousses dues au vent ou à une tentative d'effraction, dans un plan perpendiculaire au plan de déplacement du volet.

Comme dans l'art antérieur, le capteur de mouvement est apte à émettre un premier signal sans fil 30 vers l'actionneur et/ou un deuxième signal sans fil 31 vers une alarme 40 (ou un autre dispositif domotique) lors d'une variation de mouvement dans la direction principale du mouvement. Préférentiellement un signal sans fil est de type radiofréquences. Par la suite, on désignera le plus souvent par « signal » un signal sans fil.

Dans ce mode de réalisation, le boîtier du capteur de mouvement entre en contact avec un bord 19 du caisson limitant l'ouverture, ce contact étant de type butée. Ainsi, le capteur de mouvement présente au moins une double fonction : lors d'un mouvement de déroulement du volet roulant, il détecte toute variation de mouvement dans la direction principale de mouvement et peut ainsi émettre un signal en cas d'obstacle ou en cas de tentative d'intrusion. Une deuxième fonction, permise par l'invention, est de permettre la détection d'arrivée de la lame finale dans une position particulière définie par la coopération directe d'une surface de contact (ici le bord rigide du caisson) avec le capteur de mouvement. Cette détection est provoquée par un déplacement particulier du capteur de mouvement, reconnu par le capteur de mouvement qui émet alors un signal sans fil particulier 30' vers l'actionneur, reçu par un récepteur sans fil 15a de l'actionneur, par exemple un récepteur de type radiofréquences.

Le capteur de mouvement est fixé extérieurement à la barre de charge, mais entre celle-ci et une fenêtre 20 présentant une face externe 20a et une face interne 20b, intérieure à l'habitation. Le capteur de mouvement n'est donc pas visible depuis l'extérieur. Il n'est pas accessible lorsque le volet est en position basse.

La partie gauche de la figure 1 représente en vue de face la lame finale et le capteur de mouvement. La lame finale comprend deux extrémités 18a et 18b insérées dans des coulisses latérales du volet et guidées par celles-ci.
La description des figures 2A-2C, qui détaillent le capteur de mouvement 1 du dispositif domotique, complète celle de cette partie gauche de la figure 1.

Les figure 2A à 2C représentent, en coupe simplifiée, le capteur de mouvement 1 du premier mode de réalisation, selon 3 variantes de réalisation.

Dans une première variante de réalisation, représentée en figure 2A, un capteur de mouvement 1a comprend un accéléromètre 2, préférentiellement de type multi-axes, un émetteur radiofréquences 3 et un dispositif de réveil 4, disposés dans un boîtier 5a. Le dispositif de réveil comprend par exemple un contact inertiel, et il permet de ne pas alimenter l'ensemble du capteur de mouvement (et notamment l'accéléromètre) lorsque aucun mouvement n'est présent, comme connu de l'art antérieur.
Le boîtier 5a comprend également une unité de stockage d'énergie 6, telle une pile primaire, ou alternativement une autre source d'énergie électrique comme une cellule photovoltaïque raccordée à un accumulateur, alimentant l'accéléromètre et l'émetteur radiofréquences sous le contrôle du dispositif de réveil, par exemple suite à la détection d'un faible mouvement par ce dernier.
Le boîtier 5a comprend un moyen de contact 7a, destinée à entrer en contact avec le caisson. Si l'unité de stockage d'énergie 6 est de type cylindrique, le moyen de contact est avantageusement disposé au-dessus de celle-ci, comme représenté. Le boîtier 5a comprend également une face de fixation 8a, destinée à être plaquée contre la barre de charge 18, et des moyens de fixation 9. Ces moyens de fixation comprennent par exemple des trous pour le passage de vis ou de rivets. Alternativement, ils sont constitués par un adhésif double face.

Quand le moyen de contact 7a entre en contact avec le bord 19 du caisson, un déplacement particulier du capteur de mouvement est provoqué. Ce déplacement particulier peut être simplement une décélération brutale dans la direction principale de mouvement A1. Avantageusement, ce déplacement particulier comprend en outre une rotation A2 du capteur de mouvement autour d'un axe parallèle à l'axe XX' de la barre de charge.
Ce mouvement de rotation comprend une composante dans la direction A0 perpendiculaire à la direction principale de mouvement. Si l'accéléromètre 2 est de type multi-axes, un premier axe est disposé dans la direction principale de mouvement, c'est-à-dire parallèlement à la face de fixation 8, tandis qu'un deuxième axe est disposé selon la direction perpendiculaire A0. Ainsi, tout mouvement de rotation A2 est détecté par l'accéléromètre.
Le mouvement de rotation est transmis à la barre de charge, si le boîtier est fixé rigidement à celle-ci.

La figure 2B représente une deuxième variante de réalisation d'un capteur de mouvement 1b, selon le premier mode de réalisation. Un boîtier 5b comprend deux éléments partiellement mobiles l'un par rapport à l'autre : une partie rotative 51 mobile en rotation autour d'un support 52 pouvant être fixé à la barre de charge par une face de fixation 8b. La partie rotative et le support sont raccordés par une charnière 53 de type élastique et permettant un débattement angulaire limité (par exemple de 20°) entre ces deux éléments. Au repos, la charnière élastique plaque les deux éléments l'un sur l'autre, comme représenté. La partie rotative comprend un moyen de contact 7b.
La partie rotative comprend l'accéléromètre 2, ainsi que l'émetteur radiofréquences et le dispositif de réveil, non représentés.

Quand un effort de contact est appliqué au moyen de contact 7b, il y a rotation de la partie rotative. Ainsi, la rotation A2 du capteur de mouvement se trouve facilitée par rapport à la première variante de réalisation, et la composante de mouvement mesurée selon la direction perpendiculaire A0 prend des valeurs plus importantes, facilitant la détection du déplacement particulier lors du contact. Avantageusement, une partie supérieure 54 de la partie rotative du boîtier est constituée d'un élément élastique, par exemple réalisé avec un matériau élastomère, plus souple que le reste du boîtier, ce qui permet de protéger les composants du capteur lors de la butée contre caisson. Le moyen de contact 7b est conçu de manière à favoriser le mouvement de rotation. La figure 2C représente une troisième variante de réalisation d'un capteur de mouvement 1c, selon le premier mode de réalisation. Un boîtier 5c comprend de nouveau deux éléments partiellement mobiles l'un par rapport à l'autre : un tiroir 55 monté coulissant dans une glissière 56 pouvant être fixée à la barre de charge par une face de fixation 8c. Une butée de glissière 57 limite le déplacement du tiroir.
Un ressort 58 est intercalé entre le tiroir et la butée de glissière : au repos, le tiroir est écarté de la butée de glissière, comme représenté. Le tiroir comprend un moyen de contact 7c.
Quand un effort de contact est appliqué au moyen de contact 7c, le tiroir coulisse dans la glissière en direction de la butée de glissière. La composante du mouvement selon la direction A1 peut donc être mesurée sans pénaliser de manière excessive le mouvement de la barre de charge et donc sans exercer une contrainte importante sur le volet. Un accéléromètre uni-axe 2' est suffisant pour mesurer les variations du mouvement.
Avantageusement, une partie supérieure 59 du tiroir est constituée d'un élément élastique, par exemple réalisé avec un matériau élastomère, plus souple que le reste du boîtier, ce qui permet de protéger les composants du capteur lors de la butée contre caisson.

Alternativement, comme représenté par un rectangle en trait pointillé, l'accéléromètre 2' est disposé dans la glissière 56, de même que l'émetteur radiofréquences et le dispositif de réveil, non représentés. L'accéléromètre est alors fixe, relativement à la barre de charge, et il n'est pas logé dans une partie de boîtier entrant directement en contact avec le caisson. Dans cette alternative, le coulissement du tiroir dans la glissière provoque une signature vibratoire reconnue par l'accéléromètre, par exemple du fait d'un crénelage 62 disposé sur la glissière et coopérant avec une pièce élastique 61 du tiroir, formant ainsi une crécelle, constituant un vibreur mécanique 60. Cette alternative peut nécessiter un accéléromètre multi-axes. Elle est cependant particulièrement intéressante du fait de la protection mécanique de l'accéléromètre et de la possible définition de la signature vibratoire par le concepteur du capteur de mouvement.
Une telle alternative peut aussi s'appliquer à la deuxième variante de réalisation, l'accéléromètre étant disposé dans le support et la charnière présentant également un effet crécelle (par exemple si un pignon est en contact avec une pièce élastique supportant l'accéléromètre).
Que ce soit sous forme de crécelle ou autre, le capteur de mouvement comprend donc préférentiellement un vibreur mécanique activé par le mouvement relatif de deux parties du boîtier, mobiles partiellement l'une par rapport à l'autre. Ce vibreur mécanique provoque un mouvement particulier du capteur, facilement identifiable comme « signature » de l'interaction du moyen de contact du capteur avec la surface de contact de la structure fixe.

Plus généralement, la fixation du capteur de mouvement à la lame finale avec un jeu permet la détection plus fine du mouvement particulier du capteur à l'arrivée dans une position particulière, notamment en position extrême haute.

Ainsi, un déplacement particulier du capteur de mouvement (soit dans la seule direction A1, soit dans les deux directions A1 et A0) est détecté par le capteur de mouvement, qui émet alors un signal particulier 30' vers l'actionneur. Ce signal comprend une information d'arrivée en fin de course haute et/ou un ordre d'arrêt. Du fait de la très grande sensibilité du capteur de mouvement, ce signal donne naissance à un ordre d'arrêt dans un délai très court et avant toute contrainte excessive au niveau du contact entre le boîtier et le caisson.

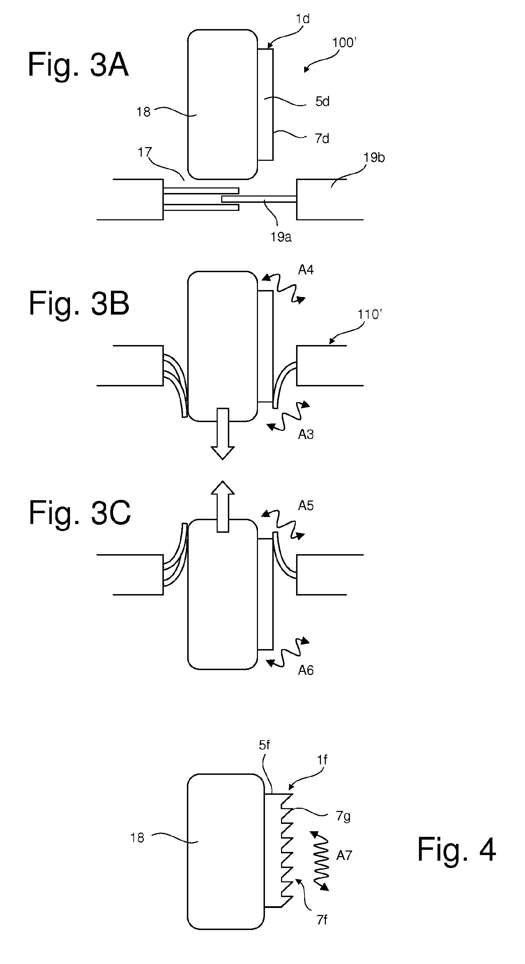

Les figures 3A-3C représentent schématiquement et partiellement un deuxième mode de réalisation 100' du dispositif domotique, applicable au cas où la barre de charge est apte à pénétrer dans le caisson en fin d'enroulement, le capteur étant disposé comme précédemment le long de la barre de charge, par exemple en son milieu. Dans ces figures partielles, le caisson appartient à la structure fixe 110'.
La figure 3A montre la barre de charge 18 dans sa position de fin de course haute, correspondant à une position enroulée du volet. Un boîtier 5d du capteur de mouvement est aussi peu épais que possible. Il présente un moyen de contact 7d correspondant préférentiellement à toute la partie de boîtier n'étant pas en contact avec la barre de charge.
L'ouverture 17 du caisson est fermée par des éléments souples, par exemple des lèvres en caoutchouc ou des balais, dont au moins un élément souple 19a est raccordé à un bord 19b de caisson en vis-à-vis du boîtier.
Les éléments souples assurent une fonction d'étanchéité du caisson à l'air et contribuent donc à l'isolation thermique du dispositif domotique.

La figure 3B montre un mouvement de la barre de charge lors d'une action de déroulement du volet roulant. Lors du passage de la barre de charge à travers le caisson, un déplacement particulier a lieu, comprenant au moins un premier mouvement alternatif A3 lors du début de contact entre élément souple et le moyen de contact 7d et un deuxième mouvement alternatif A4 lors de la fin de contact entre élément souple et moyen de contact 7d. Par mouvement alternatif, il faut entendre un mouvement complexe présentant une composante variant dans les deux sens, dans une direction au moins et généralement aussi bien dans les directions A0 et A1. En effet, le mouvement résulte de l'interaction de contact avec les éléments souples du caisson, et dépend de leur disposition, de leur raideur et de la géométrie du moyen de contact. Le mouvement est aussi influencé par la barre de charge elle-même, le jeu de guidage de celle-ci dans les coulisses, les coefficients de frottement, etc.
Une signature vibratoire particulière résulte des mesures de l'accéléromètre lors du déplacement particulier résultant du passage de la barre de charge à travers le caisson et de la dissymétrie apportée par le boîtier.
Comme dans le premier mode de réalisation, un signal particulier peut-être émis suite à la détection de ce déplacement particulier.

La figure 3C montre de même le mouvement de la barre de charge lors d'une action d'enroulement du volet, avec apparition d'un troisième mouvement alternatif A5 quand l'élément souple entre en contact avec le moyen de contact 7d et un quatrième mouvement alternatif A6 quand cesse ce contact.
Un signal particulier de fin de course haute et/ou de commande d'arrêt est émis suite à la détection de ce déplacement particulier par le capteur de mouvement.

La figure 4 représente une variante 5f d'un boîtier du capteur de mouvement. Dans cette variante, un moyen de contact 7f présente un relief cranté 7g, favorisant l'apparition d'un mouvement alternatif A7.

La figure 5 représente schématiquement et partiellement un troisième mode de réalisation 100" du dispositif domotique, applicable au cas où le contact entre le capteur et la structure fixe est établi axialement, au niveau d'une coulisse 21 ou d'une tulipe 21 a formant l'extrémité supérieure de la coulisse. On reprend dans la figure 5 les références de la figure 1. La structure fixe 110" comprend le caisson, les coulisses, la maçonnerie et/ou le vitrage.
Un capteur de mouvement 1" est disposé sur la première extrémité 18a de la barre de charge 18, dans le prolongement de la barre de charge. Ce capteur de mouvement (représenté avec des hachures inclinées) comprend au moins un accéléromètre et un émetteur radiofréquences, non représentés, et peut comprendre les mêmes éléments que décrits dans les modes de réalisation précédents, en particulier deux éléments partiellement mobiles l'un par rapport à l'autre. Une partie du capteur de mouvement peut-être insérée dans un creux de la barre de charge et apparaît sous forme d'un rectangle en trait pointillé. Le capteur comprend un boîtier dont un moyen de contact 7h est disposé sur une face supérieure et coopère avec une butée de coulisse 22. La butée de coulisse est disposée de manière à ne pas interagir avec les lames du tablier mais uniquement avec le moyen de contact. Elle constitue une surface de contact de la structure fixe.

La figure 6 illustre un procédé de fonctionnement du dispositif. Dans une première étape S1, la barre de charge est déplacée au voisinage de la position enroulée du volet, c'est-à-dire au voisinage de la fin de course haute de la barre de charge. Dans une deuxième étape S2 à lieu un contact entre le boîtier du capteur de mouvement et la structure fixe, ce contact étant de type butée ou de type rigide.
Dans une troisième étape S3, un déplacement particulier résultant de ce contact est reconnu par le capteur de mouvement et provoque l'émission d'un signal particulier 30' vers l'actionneur. Ce signal est reçu par le récepteur radiofréquences 15a et provoque un ordre d'arrêt dans l'actionneur.

En variante du deuxième mode de réalisation, il est possible de reconnaître un déplacement particulier résultant du seul troisième mouvement alternatif A5 pour provoquer l'émission d'un signal particulier et par exemple pour arrêter la barre de charge au moment où elle commence à pénétrer dans le caisson.

Les différents modes et variantes sont susceptibles d'être combinés. Grâce à l'invention, un capteur de mouvement utilisé pour effectuer une détection d'obstacle à la fermeture d'un volet roulant ou utilisé pour une détection de vent sur un store à bras est avantageusement utilisé pour émettre un signal particulier, par exemple une commande d'arrêt, lorsqu'il coopère avec une surface de contact appartenant à la structure fixe du volet ou du store.

## Revendications

1. Dispositif domotique (100, 100', 100") de fermeture ou de protection solaire comprenant une structure fixe (110, 110', 110"), un actionneur, un élément enroulable (10) déplaçable vis-à-vis de la structure fixe sous l'action de l'actionneur (15) et un capteur de mouvement (1, 1', 1"), ledit capteur comprenant des moyens de mesure de mouvement (2) et des moyens d'émission (3) d'un signal sans fil à destination du dispositif domotique, un boîtier (5, 5a, 5b, 5c, 5d, 5f) et des moyens de fixation du capteur à une barre de charge (18) positionnée à une extrémité libre de l'élément enroulable, **caractérisé en ce que** le boîtier du capteur de mouvement comprend un moyen de contact (7a, 7b, 7c, 7d, 7f, 7h) entrant en contact avec une surface de contact appartenant à la structure fixe, lors d'une manoeuvre d'enroulement de l'élément enroulable au voisinage d'une position totalement enroulée.

2. Dispositif domotique selon la revendication précédente, **caractérisé en ce que** le moyen de contact appartient à un élément élastique du boîtier protégeant le capteur lors de contacts de type butée avec la surface de contact.

3. Dispositif domotique selon l'une au moins des revendications précédentes, **caractérisé en ce que** le moyen de contact appartient à un élément rigide du boîtier, ledit élément rigide étant connecté au boîtier par une liaison élastique et protégeant le capteur lors de contacts de type butée avec la surface de contact.

4. Dispositif domotique selon l'une des revendications précédentes, **caractérisé en ce que** le moyen de contact comprend un relief cranté (7g).

5. Dispositif domotique selon l'une au moins des revendications précédentes, **caractérisé en ce que** le boîtier comprend deux éléments partiellement mobiles (51, 52, 55, 56) l'un par rapport à l'autre, un premier élément partiellement mobile étant apte à être fixé à la barre de charge et l'autre élément partiellement mobile comprenant le moyen de contact.

6. Dispositif domotique selon la revendication 5, **caractérisé en ce que** les moyens de mesure de mouvement sont disposés dans le premier élément partiellement mobile et **en ce qu'**il comprend un vibreur mécanique (60) activé par le déplacement relatif des éléments partiellement mobiles.

7. Dispositif domotique selon la revendication 5, **caractérisé en ce que** les moyens de mesure de mouvement sont disposés dans le deuxième élément partiellement mobile.

8. Dispositif domotique selon l'une au moins des revendications précédentes, **caractérisé en ce que** le moyen de contact est apte à coopérer avec une surface de contact constituée par un bord rigide (19) du caisson limitant une ouverture (17) traversée par l'élément enroulable lors de son mouvement.

9. Dispositif domotique selon l'une au moins des revendications précédentes, **caractérisé en ce que** le moyen de contact est apte à coopérer avec une surface de contact constituée par un élément souple (19a) de la structure fixe (110') limitant une ouverture (17) traversée par l'élément enroulable lors de son mouvement.

10. Dispositif domotique selon l'une au moins des revendications précédentes, **caractérisé en ce que** le moyen de contact est apte à coopérer avec une surface de contact constituée par une butée de coulisse (22) située au voisinage d'une extrémité supérieure d'une coulisse (21) guidant l'élément enroulable.

11. Dispositif domotique selon l'une des revendications précédentes, **caractérisé en ce que** les moyens de fixation comprennent des éléments assurant au moins un jeu ou un degré de liberté du capteur vis-à-vis de l'élément enroulable (10).

12. Procédé de détection de mouvement d'un dispositif domotique conforme à l'une quelconque des revendications 1 à 11, le capteur de mouvement étant fixé à l'élément enroulable du dispositif domotique, **caractérisé en ce qu'**un contact entre le moyen de contact du capteur et une surface de contact appartenant à la structure fixe provoque un déplacement particulier du capteur de mouvement, reconnu par le capteur de mouvement qui émet alors un signal sans fil particulier (30') vers l'actionneur entraînant l'élément enroulable.

13. Procédé de détection de mouvement selon la revendication précédente, **caractérisé en ce que** le déplacement particulier comprend :
- une variation de mouvement dans une direction principale du mouvement (A1) de l'élément enroulable, et/ou
- un mouvement de rotation (A2) du capteur de mouvement autour d'un axe parallèle à l'axe (XX') de la barre de charge de l'élément enroulable, et/ou
- un mouvement alternatif (A3-A7) du capteur de mouvement, et/ou
- un mouvement comprenant une composante de mouvement (A0) perpendiculaire à la direction principale du mouvement.

## Patentansprüche

1. Haustechnische Verschluss- oder Sonnenschutzvorrichtung (100, 100', 100"), die eine starre Struktur (110, 110', 110"), einen Aktuator, ein wickelbares Element (10), das gegenüber der starren Struktur unter der Wirkung des Aktuators (15) verlagerbar ist, und einen Bewegungssensor (1, 1', 1"), wobei der Sensor Bewegungsmessmittel (2) und Sendemittel (3) eines drahtlosen Signals an die haustechnische Vorrichtung umfasst, ein Gehäuse (5, 5a, 5b, 5c, 5d, 5f) und Befestigungsmittel des Sensors an einem Ausfallprofil (18), das an einem freien Ende des wickelbaren Elements positioniert ist, umfasst, **dadurch gekennzeichnet, dass** das Gehäuse des Bewegungsmelders ein Kontaktmittel (7a, 7b, 7c, 7d, 7f, 7h) umfasst, das bei einem Wickelmanöver des wickelbaren Elements in der Nähe einer vollständig gewickelten Position mit einer zur starren Struktur gehörenden Kontaktfläche in Kontakt tritt.

2. Haustechnische Vorrichtung nach vorangehendem Anspruch, **dadurch gekennzeichnet, dass** das Kontaktmittel zu einem elastischen Element des Gehäuses gehört, das den Sensor bei Kontakten vom Typ Anschlag mit der Kontaktfläche schützt.

3. Haustechnische Vorrichtung nach mindestens einem der vorangehenden Ansprüche, **dadurch gekennzeichnet, dass** das Kontaktmittel zu einem starren Element des Gehäuses gehört, wobei das starre Element mit dem Gehäuse durch eine elastische Verbindung verbunden ist und den Sensor bei Kontakten vom Typ Anschlag mit der Kontaktfläche schützt.

4. Haustechnische Vorrichtung nach einem der vorangehenden Ansprüche, **dadurch gekennzeichnet, dass** das Kontaktmittel ein gezacktes Relief (7g) umfasst.

5. Haustechnische Vorrichtung nach mindestens einem der vorangehenden Ansprüche, **dadurch gekennzeichnet, dass** das Gehäuse zwei teilweise zueinander bewegliche Elemente (51, 52, 55, 56) umfasst, wobei ein teilweise bewegliches Element am Ausfallprofil befestigbar ist und das andere teilweise bewegliche Element das Kontaktmittel umfasst.

6. Haustechnische Vorrichtung nach Anspruch 5, **dadurch gekennzeichnet, dass** die Bewegungsmessmittel im ersten teilweise beweglichen Element angeordnet sind und dass sie einen mechanischen Vibrator (60) umfasst, der durch die relative Verlagerung der teilweise beweglichen Elemente aktiviert wird.

7. Haustechnische Vorrichtung nach Anspruch 5, **dadurch gekennzeichnet, dass** die Bewegungsmessmittel im zweiten teilweise beweglichen Element angeordnet sind.

8. Haustechnische Vorrichtung nach mindestens einem der vorangehenden Ansprüche, **dadurch gekennzeichnet, dass** das Kontaktmittel imstande ist, mit einer Kontaktfläche zusammenzuarbeiten, die von einem starren Rand (19) des Kastens gebildet ist, die eine von dem wickelbaren Element bei seiner Bewegung durchquerte Öffnung (17) begrenzt.

9. Haustechnische Vorrichtung nach mindestens einem der vorangehenden Ansprüche, **dadurch gekennzeichnet, dass** das Kontaktmittel imstande ist, mit einer Kontaktfläche zusammenzuarbeiten, die von einem flexiblen Element (19a) der starren Struktur (110') gebildet ist, die eine von dem wickelbaren Element bei seiner Bewegung durchquerte Öffnung (17) begrenzt.

10. Haustechnische Vorrichtung nach mindestens einem der vorangehenden Ansprüche, **dadurch gekennzeichnet, dass** das Kontaktmittel imstande ist, mit einer Kontaktfläche zusammenzuarbeiten, die von einem Führungsanschlag (22) gebildet ist, der sich in der Nähe eines oberen Endes einer Führung (21) befindet, die das wickelbare Element führt.

11. Haustechnische Vorrichtung nach einem der vorangehenden Ansprüche, **dadurch gekennzeichnet, dass** die Befestigungsmittel Elemente umfassen, die mindestens ein Spiel oder einen Freiheitsgrad des Sensors gegenüber dem wickelbaren Element (10) sichern.

12. Verfahren zur Bewegungsdetektion einer haustechnischen Vorrichtung nach einem der Ansprüche 1 bis 11, wobei der Bewegungsmelder am wickelbaren Element der haustechnischen Vorrichtung befestigt ist, **dadurch gekennzeichnet, dass** ein Kontakt zwischen dem Kontaktmittel des Sensors und einer zur starren Struktur gehörenden Kontaktfläche eine besondere Verlagerung des Bewegungsmelders bewirkt, die vom Bewegungsmelder erkannt wird, der dann ein besonderes drahtloses Signal (30') zu dem Aktuator schickt, der das wickelbare Element bewegt.

13. Verfahren zur Bewegungsdetektion nach vorangehendem Anspruch, **dadurch gekennzeichnet, dass** die besonderer Verlagerung umfasst:
- eine Bewegungsvariation in eine Hauptbewegungsrichtung (A1) des wickelbaren Elements, und/oder
- eine Rotationsbewegung (A2) des Bewegungsmelders um eine zur Achse (XX') des Ausfallprofils des wickelbaren Elements parallele Achse, und/oder
- eine wechselnde Bewegung (A3-A7) des Bewegungsmelders, und/oder
- eine Bewegung, die eine zur Hauptbewegungsrichtung senkrechte Bewegungskomponente (A0) umfasst.

## Claims

1. Closure or solar protection home automation device (100, 100', 100") comprising a fixed structure (110, 110', 110''), an actuator, a windable element (10) that can be displaced with respect to the fixed structure under the action of the actuator (15) and a motion sensor (1, 1', 1"), said sensor comprising motion measuring means (2) and means (3) of emitting a wireless signal to the home automation device, a case (5, 5a, 5b, 5c, 5d, 5f) and means of fixing the sensor to a load bar (18) positioned at a free end of the windable element, **characterized in that** the case of the motion sensor comprises a contact means (7a, 7b, 7c, 7d, 7f, 7h) coming into contact with a contact surface belonging to the fixed structure, during a winding operation of the windable element in the vicinity of a fully wound position.

2. The home automation device as claimed in the preceding claim, **characterized in that** the contact means belongs to an elastic element of the case protecting the sensor during abutment-type contacts with the contact surface.

3. The home automation device as claimed in one of the preceding claims, **characterized in that** the contact means belongs to a rigid element of the case , said rigid element being connected to the case by an elastic link and protecting the sensor during abutment-type contacts with the contact surface.

4. The home automation device as claimed in one of the preceding claims, **characterized in that** the contact means comprises a toothed relief (7g).

5. The home automation device as claimed in one of the preceding claims, **characterized in that** the case comprises two elements (51, 52, 55, 56) partially mobile relative to one another, a first partially mobile element being able to be fixed to the load bar and the other partially mobile element comprising the contact means.

6. The home automation device as claimed in claim 5, **characterized in that** the motion measuring means are positioned in the first partially mobile element and **in that** it comprises a mechanical vibrator (60) activated by the relative displacement of the partially mobile elements.

7. The home automation device as claimed in claim 5, **characterized in that** the motion measuring means are positioned in the second partially mobile element.

8. The home automation device as claimed in one of the preceding claims, **characterized in that** the contact means is able to cooperate with a contact surface consisting of a rigid edge (19) of the box delimiting an opening (17) passed through by the windable element during its movement.

9. The home automation device as claimed in one of the preceding claims, **characterized in that** the contact means is able to cooperate with a contact surface consisting of a flexible element (19a) of the fixed structure (110') delimiting an opening (17) passed through by the windable element during its movement.

10. The home automation device as claimed in one of the preceding claims, **characterized in that** the contact means is able to cooperate with a contact surface consisting of a slide abutment (22) situated in the vicinity of a top end of a slide (21) guiding the windable element.

11. The home automation device as claimed in one of the preceding claims, **characterized in that** the fixing means comprise elements that provide at least a clearance or a degree of freedom of the sensor with respect to the windable element (10).

12. A motion detection method of a home automation device according to one of claims 1-11, the motion sensor being fixed to the windable element of the home automation device, **characterized in that** a contact between the contact means of the sensor and a contact surface belonging to the fixed structure provokes a particular displacement of the motion sensor, recognized by the motion sensor, which then emits a particular wireless signal (30') to the actuator driving the windable element.

13. The motion detection method as claimed in the preceding claim, **characterized in that** the particular displacement comprises:
- a motion variation in a main direction of the motion (A1) of the windable element, and/or
- a rotational motion (A2) of the motion sensor about an axis parallel to the axis (XX') of the load bar of the windable element, and/or
- an alternate motion (A3-A7) of the motion sensor, and/or
- a motion comprising a motion component (A0) perpendicular to the main direction of motion.
